# EUROPÄISCHE PATENTSCHRIFT

(11) **EP 4 292 435 B1**
(45) Veröffentlichungstag und Bekanntmachung des Hinweises auf die Patenterteilung: **09.10.2024**
(21) Anmeldenummer: 23174422.8
(22) Anmeldetag: 22.05.2023
(51) Int. Cl.: A22C 7/00, A22C 17/00, A22C 25/06, A22C 25/08, A22C 25/18

(54) **VORRICHTUNG UND VERFAHREN ZUM HERSTELLEN EINES BLOCKS AUS FLEISCH**
APPARATUS AND METHOD FOR PRODUCING A BLOCK OF MEAT
DISPOSITIF ET PROCÉDÉ DE FABRICATION D'UN BLOC DE VIANDE

(30) Priorität: 15.06.2022 DE 102022115098
(43) Veröffentlichungstag der Anmeldung: 20.12.2023
(73) Patentinhaber: Eberhardt GmbH, 91586 Lichtenau (DE)
(72) Erfinder: Eberhardt, Rainer, 91586 Lichtenau (DE)
(74) Vertreter: Grünecker Patent- und Rechtsanwälte PartG mbB

(56) Entgegenhaltungen:
- DE-T2- 69 601 169
- US-A- 4 934 026

## Beschreibung

Die vorliegende Erfindung betrifft eine Vorrichtung zum Herstellen eines Blocks aus Fleisch, insbesondere aus Fischfleisch, gemäß Anspruch 1. Ferner bezieht sich die Erfindung auf ein dementsprechendes Verfahren gemäß Anspruch 8.

Herkömmlicherweise wird eine horizontal liegende, kastenartige Form von einem Arbeiter mit Fischfleisch, beispielsweise mit Fischfiletstücken, befüllt, um einen länglichen Block aus Fischfleisch herzustellen. Ein derart hergestellter, ggf. durch einen nachgelagerten Press- und/oder Räuchervorgang weiterbehandelter, Block aus Fischfleisch kann quer zu dessen Längserstreckung mittels einer Schneideinrichtung in Scheiben geschnitten werden. Allerdings lassen sich dabei erfahrungsgemäß nur optisch unschöne Scheiben herstellen, die meistens zerstückelt aussehende Kleinscheibenformate haben. Diese Scheibenformate lassen sich schwer weiterverarbeiten.

Für die voranstehend beschriebene Problematik ist verantwortlich, dass aufgrund der herkömmlichen Einlegepraxis innerhalb des damit gebildeten Blocks aus Fischfleisch zumeist die Längsseiten der Fischfleischstücke in Längserstreckung des Blocks ausgerichtet sind, insbesondere Muskelfasern der jeweiligen Fischfleischstücke in unterschiedlichen Richtungen, vor allen Dingen quer zur Längserstreckung des Blocks ausgerichtet sind und/oder die jeweiligen Fischfleischstücke quer oder längs des Blocks überlappend aufeinanderliegen. Das daraus erhältliche Schnittgut ist dementsprechend inhomogen, vor allem kleinformatig ausgebildet. Hinzu kommt, dass optisch unschöne Scheiben erhöhten Ausschuss bilden.

DE 696 01 169 T2 offenbart eine längliche Form zum Herstellen eines Blocks aus Fischfleisch bzw. einer Fischsäule. Das Bilden der Fischsäule geschieht, indem die Form senkrecht stehend an einem Gestell befestigt ist und flache Fischstücke in der Form übereinander gestapelt werden. Um die Fischsäule aus der Form zu lösen, wird die Form liegend in mehreren Schritten in ihre Einzelteile auseinandergebaut. Beim Auseinanderbauen der Form kommt ein hydraulischer Zylinder zum Einsatz, um zusammengesteckte Seitenteile der Form auseinander zu schieben.

US 4 934 026 A offenbart einen Container, der zum Verfrachten von darin aufgenommenen, geschichteten Lebensmitteln konfiguriert ist. Der Container ist im Wesentlichen aus einem äußeren Behälterteil und einem mittels eines Beutels ausgekleideten inneren Behälterteil zusammengebaut.

Aufgabe der Erfindung ist es, eine Vorrichtung sowie ein Verfahren zur Verfügung zu stellen, womit sich ein Block aus Fleisch mittels einfacher, konstruktiver technischer Mittel in wirtschaftlicher Art und Weise und unter verbesserten hygienischen Bedingungen herstellen lässt.

Diese Aufgabe wird gelöst anhand einer Vorrichtung gemäß Anspruch 1 sowie mittels eines Verfahrens gemäß dem unabhängigen Anspruch 8.

Vorteilhafte Weiterbildungen der Erfindung sind durch die jeweiligen abhängigen Ansprüche gegeben.
Die Erfindung bezieht sich auf eine Vorrichtung mit mindestens einer länglich ausgebildeten Form, mittels welcher mindestens ein Block aus Fleisch, insbesondere aus Fischfleisch, herstellbar ist, und mit mindestens einem länglich ausgebildeten Niederhalter, der innerhalb der Form zum Fixieren einer darin eingelegten Materialbahn aufnehmbar ist.

Erfindungsgemäß ist die Form zwischen einer ersten Ausrichtung, in welcher die Form in ihrer Längserstreckung liegend für einen Zusammenbau mit dem Niederhalter positioniert ist, und einer zweiten Ausrichtung verstellbar gelagert, in welcher die Form in ihrer Längserstreckung stehend zum Einlegen von Fleisch in übereinanderliegenden Schichten positioniert ist. Bei der Erfindung kann die längliche Form aus einer im Wesentlichen horizontalen Lagerung gemäß der ersten Ausrichtung in die zweite Ausrichtung zum Einlegen von Fleisch gebracht werden, in welcher die Form im Wesentlichen vertikal aufgestellt ist, sodass sich darin das Fleisch, vorzugsweise Fischfleisch, Stück für Stück in übereinanderliegenden Schichten auftürmen lässt. Damit entsteht in der Form ein Block mit einer Anordnung aus übereinanderliegenden (Fisch-)Fleisch-schichten, deren Längsseiten quer zur Längserstreckung des Blocks ausgerichtet sind, sprich innerhalb des Blocks einen Muskelfaserverlauf haben, anhand dessen sich die jeweiligen Schichten aus Fischfleisch besser in optisch einheitliche Scheiben schneiden lassen, wenn der Block der Länge nach von einem Schneidmesser geschnitten wird.

Vorzugsweise kommt die erfindungsgemäße Vorrichtung zum Bilden eines Blocks aus Fischfleisch zum Einsatz. Es können jedoch auch andere Fleischarten mittels der erfindungsgemäßen Vorrichtung zu einem Block geformt werden, beispielsweise Fleisch aus Rind, Schwein, Schaf, Ziege, Huhn oder Pute. Ferner kommen Fleischersatzprodukte in Frage. Obwohl die Erfindung im Folgenden primär in Zusammenhang mit Fischfleisch beschrieben wird, ist die Erfindung durchaus auch zur Verarbeitung anderer Fleischprodukte einsatzfähig.

Die Erfindung ermöglicht es, dass die aus dem gebildeten Block aus Fleisch geschnittenen Scheiben vergleichbar groß ausgebildet sind, sodass deren Weiterverarbeitung einfacher ist, sich beispielsweise diese Scheiben einheitlich verpacken lassen.

Indem die Form gemäß der zweiten Ausrichtung zum Einlegen von Fleisch, insbesondere zum Einlegen von Fischfleisch, aufgestellt ausgerichtet ist, üben die innerhalb der aufgestellten Form aufgetürmten Fischfleischstücke durch deren Eigengewicht einen Presseffekt auf darunterliegende Schichten aus, sodass bereits beim Einlegen des Fischfleisches in die Form Eigensaft aus der Form abscheidbar ist, wodurch der Block besser zusammenhält und sich besser weiterverarbeiten lässt.

Gemäß einer Ausführungsform der Erfindung weist die Vorrichtung eine Schwenkeinheit für die Form auf. Mit dieser ist es möglich, die Form auf einfache Art und Weise aus der ersten, liegenden Ausrichtung in die zweite, stehende Ausrichtung zum Befüllen der Form mit Fischfleisch zu bringen. Ferner kann die Schwenkeinheit das Zurückbringen der Form aus der zweiten in die erste Ausrichtung erleichtern, um den darin gebildeten Block aus Fischfleisch aus der Form herauszunehmen.

Vorstellbar wäre es, dass die Schwenkeinheit mittels mindestens einer Gasdruckfeder unterstützt wird, um die Form zwischen der ersten und der zweiten Ausrichtung zu verstellen. Gegebenenfalls kann in der Gasdruckfeder ein Dämpfungsmechanismus integriert sein, um die Form im beladenen Zustand mühelos aus der aufgestellten, zweiten Ausrichtung zurück in die liegende, erste Ausrichtung zu bewegen.

Vorzugsweise umfasst die Schwenkeinheit eine Aufnahme, in welcher die Form zumindest abschnittsweise aufnehmbar ist. Die Aufnahme bildet für die Form insbesondere eine Halterung aus, mittels welcher die Form sicher zwischen der ersten und der zweiten Ausrichtung verstellbar ist. Vor allem im beladenen Zustand lässt sich die in der Aufnahme getragene Form sicher aus der zweiten Ausrichtung zurück in die erste Ausrichtung niederlegen.

Einfach ließe sich die Form dadurch in der Aufnahme anordnen, dass die Aufnahme eine längliche, auf einer Schmalseite offen ausgebildete Kastenform aufweist, in welcher die Form der Länge nach einschiebbar ist. Aus hygienischen Gründen wäre es vorteilhaft, wenn die Form und/oder die Aufnahme jeweils einteilig ausgebildet ist, insbesondere, wenn sich die Form ohne Verwendung von gesonderten Hilfsmitteln in der Aufnahme anordnen lässt. Die Form und/oder die Aufnahme können aus Edelstahl hergestellt sein.

Gemäß einer Variante ist die Form lösbar, vorzugsweise werkzeuglos lösbar, in der Aufnahme befestigt. Die Form kann insbesondere mittels Formschluss in der Aufnahme gehalten sein.

Eine vorteilhafte Variante sieht vor, dass die Vorrichtung einen Tisch aufweist, wobei die Schwenkeinheit an einer vom Tisch gebildeten Außenkante befestigt ist. Der Tisch bildet für die Schwenkeinheit, insbesondere für die Schwenkeinheit mit daran aufgenommener Form einen stabilen Unterbau. Der Tisch weist insbesondere eine Tischplatte auf, auf welcher die Form, wenn sie in der ersten Ausrichtung vorliegt, ablegbar ist. Die Handhabung der Form und/oder des Niederhalters wird auf dem Tisch enorm vereinfacht.

Denkbar wäre es, dass eine durch die Schwenkeinheit gebildete Schwenkachse mit der vom Tisch gebildeten Außenkante im Wesentlichen fluchtet. Damit kann im Bereich der Außenkante des Tisches ein Drehgelenk zum Verlagern der Form zwischen der ersten und der zweiten Ausrichtung gebildet werden, sodass die mittels der Schwenkeinheit aufgestellte Form zum Einlegen von Fischfleisch für einen am Tisch stehenden Befüller gut zugänglich ist. Als Befüller käme ein Arbeiter oder ein Roboter in Frage, um das Fischfleisch manuell bzw. automatisiert in die aufrechtgestellte Form Schicht auf Schicht einzulegen.

Die Schwenkachse kann durch mindestens einen an der Außenkante des Tisches drehbar gelagerten Bolzen gebildet sein. Der Bolzen kann in einem Rohrstück gelagert sein. Das Rohrstück ist insbesondere auf einem L-Profil befestigt, das wiederum an der Außenkante des Tisches fixiert ist, beispielsweise mittels einer oder mehreren Schraubzwingen. Dadurch entsteht ein einfacher, robuster und auch kostengünstiger Aufbau für die Schwenkeinheit.

Die Form ließe sich einfacher von einem Bediener zwischen der ersten und der zweiten Ausrichtung verstellen, wenn die Schwenkeinheit als Wippe vorliegt, d.h. die Schwenkachse zwischen jeweiligen Abschnitten der Aufnahme positioniert ist. Dadurch ist die aufgestellte Form automatisch, insbesondere dann, wenn sie mit Fischfleisch beladen ist, besser gesichert. Dies kann ohne zusätzliche Hilfseinrichtungen, allein durch die Kräfteverteilung der Wippe geschehen. Das Flachlegen der Form kann dann durch Mitwirkung der um die Schwenkachse wirkenden Hebel mit geringem Kraftaufwand gemeistert werden.

Gemäß einer Ausführungsform der Erfindung ist anhand der Aufnahme und des darin innerhalb der Form aufgenommenen Niederhalters eine Halterung zum Befestigen von mindestens einer Verschlussplatte für die Form herstellbar. Die Halterung wird insbesondere dadurch gebildet, dass durch Aufnahme der Form einschließlich des darin positionierten Niederhalters in der Aufnahme zwischen dem Niederhalter und der Aufnahme ein Spalt entsteht, in dem die Verschlussplatte einschiebbar ist. Dadurch ergibt die Möglichkeit, dass schichtweise innerhalb der Form gestapeltes Fischfleisch mittels der Verschlussplatte vom Herausfallen gesichert werden kann.

Denkbar wäre es, dass die zwischen der Aufnahme und dem Niederhalter gebildete Halterung zum Befestigen mehrerer Verschlussplatten konfiguriert ist, die nach und nach das in die Form gestapelte Fischfleisch vom Herausfallen sichern. Die Verschlussplatten liegen sozusagen als nach oben erweiterbare Bordwand vor, die an der Form ausbaubar ist, wenn sie sich in der Aufnahme in der zweiten Ausrichtung befindet, sprich im Wesentlichen vertikal aufgestellt ist.

Vorzugsweise ist die Form im Wesentlichen kastenförmig ausgebildet. Damit lässt sich als Block ein Quader aus Fischfleisch hergestellt werden. In dieser Form kann ein Block aus Fischfleisch hergestellt werden, der sich gut weiterverarbeiten lässt, insbesondere welcher sich mittels einer Schneideinrichtung problemlos in Scheiben schneiden lässt. Vorzugsweise weist die Form ein Beladevolumen von mindestens 10x10x100 cm auf. Ein gemäß diesem Beladevolumen hergestellter Block aus Fischfleisch weist eine gut weiterverarbeitbare Quaderform auf, unabhängig davon, ob der Block manuell oder maschinell weiterverarbeitet wird.

Bevorzugterweise ist der Niederhalter ebenfalls kastenförmig ausgebildet, besitzt aber im Vergleich zur Form keinen Boden. Der Niederhalter kann formschlüssig in die Form hineingeschoben werden, um die darin eingelegte Materialbahn entlang von Innenseiten der Form zu befestigten bzw. die Form an ihren Innenseiten mit der Materialbahn auszukleiden.

Eine bevorzugte Variante sieht vor, dass die Form mit einem Deckel zusammenbaubar ist, wobei das innerhalb der Form aufgenommene Fischfleisch anhand des Deckels komprimierbar ist. Vorstellbar wäre es, dass der Deckel in Längserstreckung der Form das darin aufgenommene Fischfleisch zusammenpresst und/oder das Fischfleisch quer zur Längserstreckung der Form zusammenpresst. Damit wird innerhalb des Blocks eine homogene Dichte erreicht, wodurch sich aus dem Block noch besser Scheiben mit gleichwertiger Optik herausschneiden lassen.

Vorstellbar ist es, dass die Vorrichtung ein Presswerk aufweist, das zur Aufnahme mehrerer Formen mit darin aufgenommenem Fischfleisch ausgebildet ist und das gleichzeitig auf das Fischfleisch aller darin aufgenommenen Formen eine vorbestimmte, gleichwertige Presskraft erzeugt. Hierfür wäre es möglich, dass die mittels des Presswerks erzeugte Presskraft von Form zu Form übertragbar ist. Dies kann dadurch erreicht werden, dass die jeweiligen Formen im Presswerk übereinandergestapelt sind, wobei das Presswerk auf das aufgenommene Fischfleisch der an oberster Stelle angeordneten Form eine Presskraft ausübt, die über den Boden der Form auf das aufgenommene Fischfleisch einer darunter positionierten Form weitergegeben wird, usw.

Das Presswerk kann als Räucherkammer ausgebildet sein, damit das darin für den Pressvorgang untergebrachte Fischfleisch gleich während des Pressvorgangs, ggf. gleichzeitig geräuchert werden kann.

Die vorliegende Offenbarung bezieht sich ferner auf einen länglich ausgebildeten Block aus Fleisch, insbesondere aus Fischfleisch, mit der Besonderheit, dass das Fleisch innerhalb des Blocks in mehreren übereinanderliegenden, quer zur Längserstreckung des Blocks gebildeten Schichten angeordnet ist. Im Block verlaufen daher die Muskelfasern des darin angeordneten Fischfleischs im Wesentlichen quer zur Längserstreckung des Blocks, sodass aus diesem, wenn er der Länge nach einer Schneideinrichtung zugeführt wird, Scheiben mit einer zumeist gleichwertigen, schöneren Optik hergestellt werden können.

Die Erfindung betrifft des Weiteren ein Verfahren zum Herstellen eines aus Fleisch, insbesondere aus Fischfleisch, geformten Blocks. Gemäß dem erfindungsgemäßen Verfahren wird mindestens eine länglich ausgebildete Form zunächst in einer ersten Ausrichtung bereitgestellt, in welcher die Form in Längserstreckung liegend positioniert wird, um darin eine Materialbahn, beispielsweise eine Kunststofffolie, mittels eines Niederhalters zu fixieren. In einem weiteren Schritt der Erfindung wird die Form samt dem darin aufgenommenen Niederhalter aus der ersten, liegenden Ausrichtung in eine zweite Ausrichtung verstellt, in welcher die Form in Längserstreckung stehend, d.h. im Wesentlichen vertikal aufgestellt, positioniert wird. Ferner sieht das erfindungsgemäße Verfahren vor, dass die in der zweiten Ausrichtung gelagerte Form mit Fleisch in übereinanderliegenden Schichten zum Bilden eines Blocks aus Fleisch beladen wird.

Dadurch ist es möglich, die in der zweiten Ausrichtung im Wesentlichen hochkant gestellte Form Schicht für Schicht mit vorzugsweise Fischfleisch zu beladen, sodass innerhalb der Form ein Turm aus übereinander geschichtetem Fischfleisch entsteht. Das derart eingelegte Fischfleisch bildet im Verbund einen Block mit im Wesentlichen durchgehend quer zur Längserstreckung des Blocks verlaufenden Muskelfasern, wodurch aus dem Block heraus optisch hochwertige Scheiben herausschneiden lassen.

Vorteilhaft ist es, wenn der Block aus Fischfleisch aus der Form herausgenommen und der Länge nach einem Schneidvorgang zugeführt wird, anhand welchem quer zur Längserstreckung des Blocks Scheiben aus dem Block geschnitten werden. Die daraus resultierenden Scheiben weisen eine im Wesentlichen optisch homogene Form auf und lassen sich demnach auch gut weiterverarbeiten.

Gemäß einer Ausführungsform wird die Form einem Pressvorgang zum Komprimieren des in der Form gebildeten Blocks aus Fischfleisch zugeführt. Dieser Pressvorgang kann im Anschluss an den Beladevorgang stattfinden, ggf. mit aus der Form herausgenommenem Niederhalter. Denkbar wäre es, dass die Form einem Räuchervorgang zum Aromatisieren des in der Form gebildeten Blocks aus Fischfleisch zugeführt wird. Damit lässt sich auch die Haltbarkeit des Fischfleischs verlängern.

Denkbar wäre es, dass der Pressvorgang und der Räuchervorgang gemeinsam innerhalb eines Presswerk, insbesondere einer darin gebildeten Kammer, durchgeführt werden.

Ausführungsbeispiele der Erfindung werden anhand der folgenden Figuren genauer erläutert. Es zeigen:
Figuren 1A bis 1E ein schematisch dargestellter Aufbau einer Vorrichtung zum Herstellen eines Blocks aus Fleisch, insbesondere aus Fischfleisch,
Figur 2 ein mittels der erfindungsgemäßen Vorrichtung herstellbarer Block aus Fischfleisch,
Figuren 3A bis 3I Arbeitsschritte zum Herstellen eines Blocks Fischfleisch.

Gleiche technische Merkmale sind in den Figuren durchgängig mit denselben Bezugszeichen versehen.

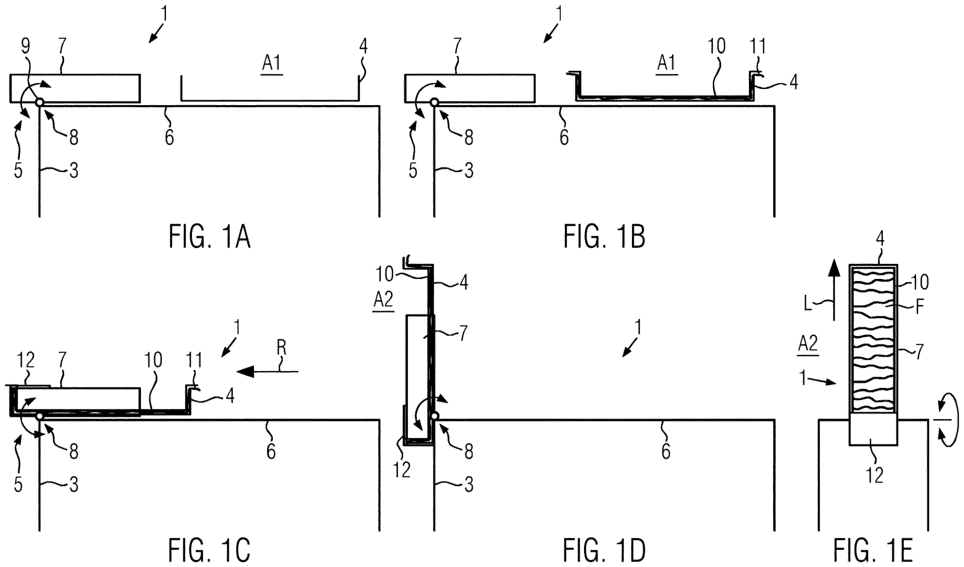

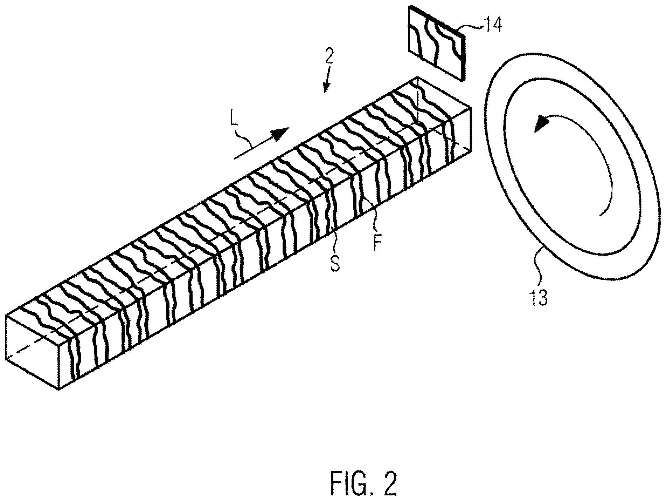

Figur 1A zeigt eine Vorrichtung 1 zum Herstellen eines aus Fischfleisch gebildeten Blocks 2 (s. Figur 2). Die Vorrichtung 1 aus Figur 1A umfasst einen Tisch 3, eine auf dem Tisch 3 abgelegte Form 4 sowie eine am Tisch 3 befestigte Schwenkeinheit 5. Die Form 4 liegt auf einer Tischplatte 6 des Tischs 3. Gemäß Figur 1A ist die Form 4 in einer ersten Ausrichtung A1 positioniert, in welcher die Form 4 in deren Längserstreckung horizontal liegend vorliegt.

Figur 1A zeigt auch, dass die Schwenkeinheit 5 eine Aufnahme 7 aufweist, die um eine Schwenkachse 8 drehbar gelagert ist. Die Schwenkeinheit 5 liegt gemäß Figur 1A als Wippe vor. Die Schwenkachse 8 fluchtet im Wesentlichen mit einer Außenkante 9 des Tischs 3.

Figur 1B zeigt, dass in der Form 4 ein Niederhalter 10 zum Fixieren einer in die Form 4 eingelegten Materialbahn 11 aufgenommen ist. Die Materialbahn 11 wird demnach zwischen der Form 4 und dem Niederhalter 10 fixiert. Die Materialbahn 11 kann eine Kunststofffolie sein, die sich mittels des Niederhalters 10 entlang der Innenseiten der Form 4 befestigen lässt.

Figur 1C zeigt, dass die Form 4 zusammen mit dem darin aufgenommenen Niederhalter 10 in Richtung R teilweise in die Aufnahme 7 der Schwenkeinheit 5 geschoben sind. Die Aufnahme 7 bildet im unteren Bereich einen Aufnahmeschuh 12 aus, in den die Form samt dem Niederhalter 10 einschiebbar ist. Der Aufnahmeschuh 12 bildet dabei eine Einhausung für den unteren Teil der Form 4 aus. Mittels des Aufnahmeschuhs 12 ist es somit möglich, die Form 4 samt dem Niederhalter 10 in der Aufnahme 7 formschlüssig zu sichern.

Gemäß Figur 1D ist die Form 4 und der darin aufgenommene Niederhalter 10 aus der ersten Ausrichtung A1 in eine zweite Ausrichtung A2 verstellt, in welcher die Form 4 in ihrer Längserstreckung L vertikal stehend zum Einlegen von Fischfleisch F positioniert ist. Gemäß Figur 1D ist die Form nun so positioniert, dass darin ein Turm aus über einander geschichteten Fischfleischstücken F gebildet werden kann. Dies zeigt Figur 1E.

Figur 1E zeigt die Vorrichtung 1 mit aufgestellter Form 4 aus einer Vorderansicht. In der aufgestellten Form 4 sind mehrere in übereinanderliegenden Schichten angeordnete Fischfleischstücke, beispielsweise Fischfilets, aufgetürmt. Die Fischfleischstücke liegen übereinander in der Form 4, sind sozusagen quer zur Längserstreckung L der Form 4 geschichtet.

Aus der zweiten Ausrichtung A2 gemäß Figur 1E kann die Form 4 zurück in die erste Ausrichtung A1 verstellt werden. Der Niederhalter 10 kann dann aus der Form 4 herausgenommen werden. Anschließend kann die Form 4 mit dem darin gebildeten Block 2 aus Fischfleisch Feinem weiteren Bearbeitungsprozess zugeführt werden, beispielsweise einem Pressvorgang und/oder einem Räuchervorgang, bevor der Block 2 aus der Form 4 herausgenommen und einem Schneidvorgang zugeführt wird.

Figur 2 zeigt einen mittels der Vorrichtung 1 aus den Figuren 1A bis 1E hergestellten Block 2 aus Fischfleisch F. Figur 2 zeigt insbesondere, dass mehrere Fischfleischstücke innerhalb des Blocks 2 in mehreren übereinanderliegenden, quer zur Längserstreckung L des Blocks 2 gebildeten Schichten S angeordnet sind. Damit verlaufen auch die Muskelfasern der Fischfleischstücke im Verbund des Blocks 2 quer zu dessen Längserstreckung L.

Ferner zeigt Figur 2 in schematischer Darstellung ein Schneidmesser 13, das zu einer Schneideinrichtung, in Fachkreisen auch Slicer genannt, gehört und das dazu konfiguriert ist, den Block 2 quer zu dessen Längserstreckung L in Scheiben 14 zu schneiden. Eine entsprechend des Querschnitts des Blocks 2 resultierende Scheibe 14 wird in Figur 2 gezeigt, dessen Faserverlauf durchgehend ist, da das Schneidmesser 13 den Block 2 im Faserverlauf der darin angeordneten Schichten S in Scheiben 14 aufschneidet.

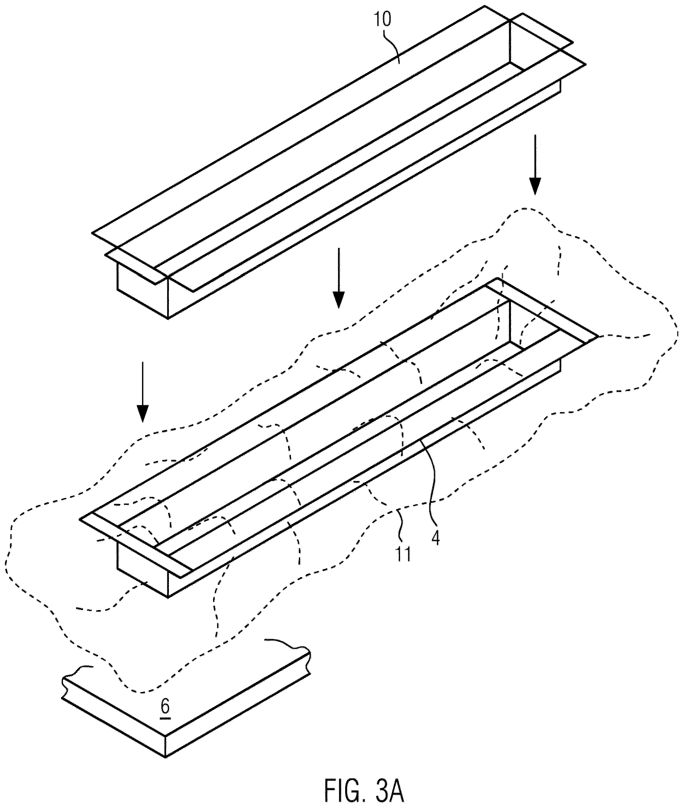

Figur 3A zeigt die Form 4 in perspektivischer Darstellung auf der Tischplatte 6 mit einer darin eingelegten Materialbahn 11. Ein Bediener hebt den Niederhalter 10 in die Form 4, um die Materialbahn 11 darin zu fixieren. Der Niederhalter 10 aus Figur 3A weist im Wesentlichen die Geometrie der Form 4 auf, besitzt jedoch im Vergleich zur Form 4 keinen Boden.

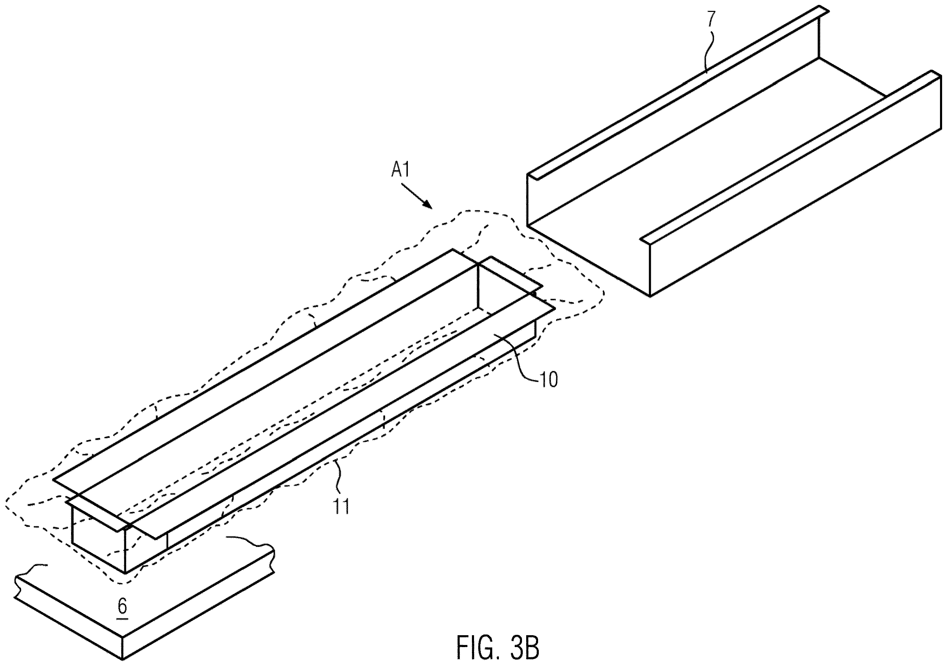

In Figur 3B ist der Niederhalter 10 vollständig innerhalb der Form 4 platziert. Die Form 4 kann nun zusammen mit dem darin aufgenommenen Niederhalter 10 in die Aufnahme 7 gehoben bzw. geschoben werden.

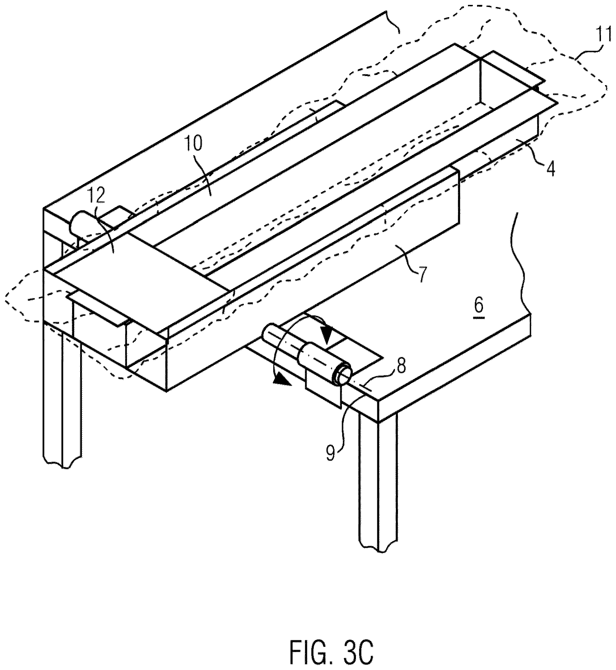

In der Aufnahme 7 aufgenommen lässt sich die Form 4 samt dem Niederhalter 10 gemäß Figur 3C hochklappen. Figur 3C zeigt, dass die Aufnahme 7 im unteren Bereich den Aufnahmeschuh 12 vorsieht, in welchem die Form 4 und der Niederhalter 10 innerhalb der Aufnahme 7 stabil befestigt sind.

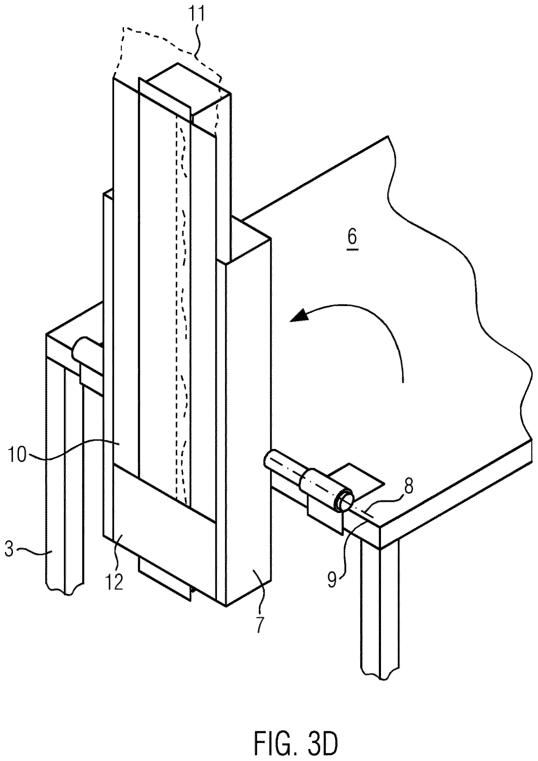

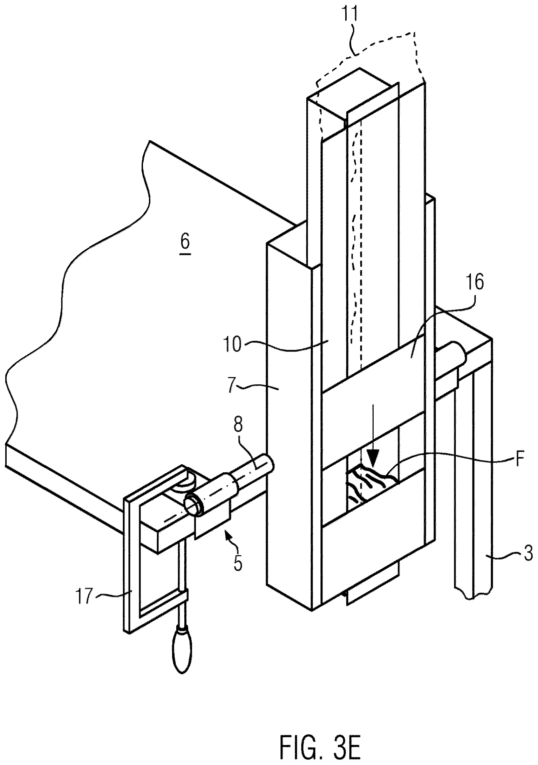

In Figur 3D und Figur 3E ist die Form 4 in der zweiten Ausrichtung A2 positioniert, d.h. hochkant im Wesentlichen vertikal gestellt, in welcher Fischfleischstücke F in der Form 4 aufgetürmt werden können, um den in Figur 2 gezeigten Block 2 herzustellen.

Figur 3E zeigt, dass zwischen dem Niederhalter 10 und der Aufnahme 7 eine Halterung 15 für eine Verschlussplatte 16 gebildet ist. Die in der Halterung 15 eingeschobene Verschlussplatte 16 kann ein Herausfallen von in die Form 4 hineingelegten Fischfleischstücken verhindern.

Außerdem zeigt Figur 3E, dass die Schwenkeinheit 5 mittels einer Schraubzwinge 17 lösbar am Tisch 3 befestigt ist.

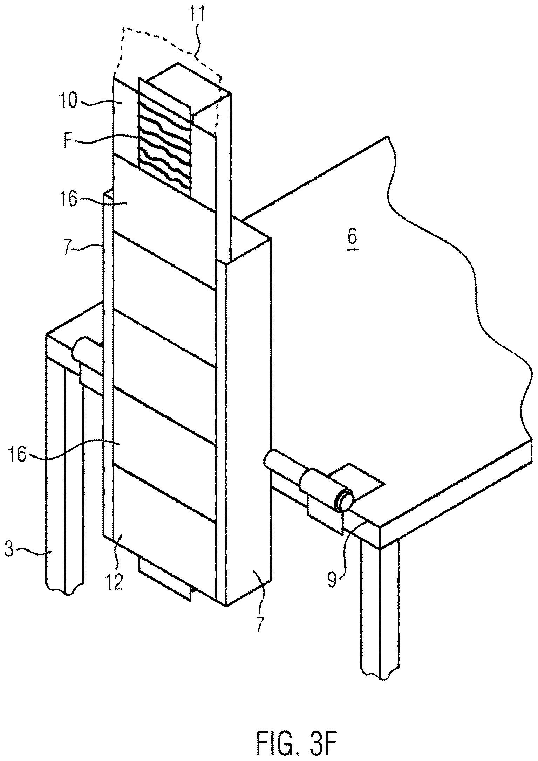

Figur 3F zeigt, dass die Form 4 vollständig beladen mit darin aufgeschichtetem Fischfleisch F. Ferner zeigt Figur 3F, dass an der Form 4 bis oben hin Verschlussplatten 16 montiert sind, um ein Herausfallen der Fischfleischstücke aus der Form 4 zu verhindern.

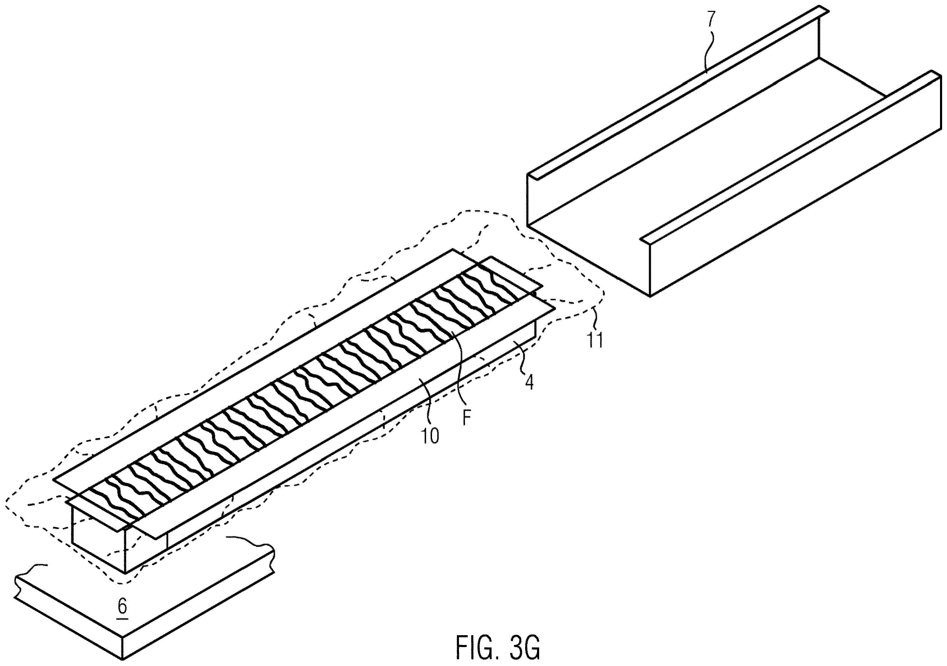

Figur 3G zeigt die Form 4 samt dem darin gebildeten Block 2 aus Fischfleischstücken liegend in der ersten Ausrichtung A1 auf der Tischplatte 6.

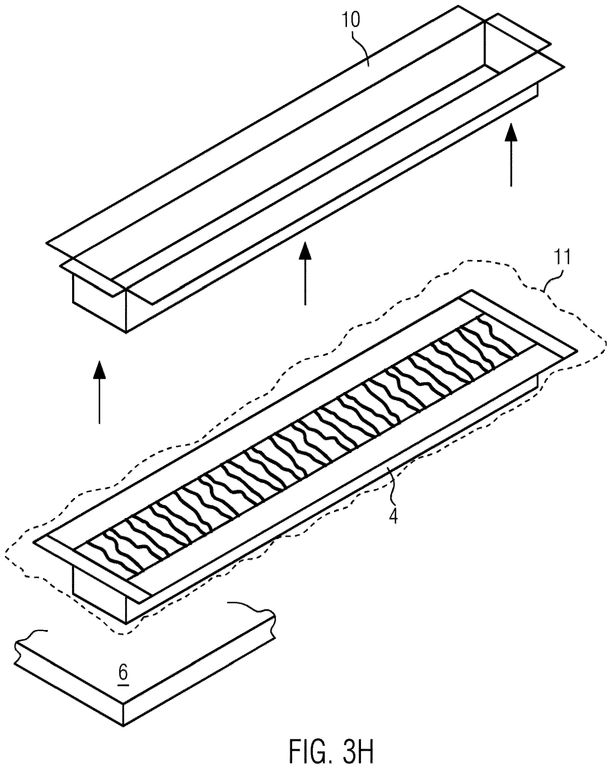

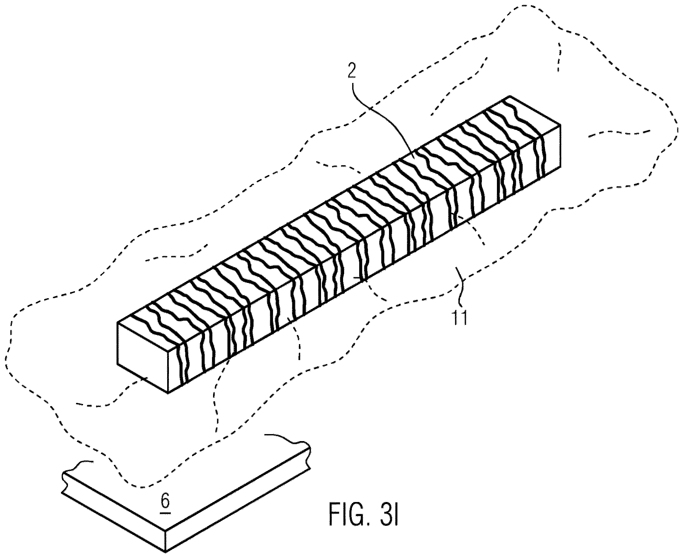

Gemäß Figur 3H wird der Niederhalter 10 aus der Form 4 herausgezogen. Nun kann der in der Form 4 gebildete Block 2 auf die Tischplatte 6 gekippt werden, was in der Figur 3I gezeigt wird. Denkbar wäre es, dass die Form 4 nach der Herausnahme des Niederhalters 10 mit einem nicht gezeigten Deckel zusammengebaut wird, der dazu ausgelegt ist, den aus dem Fischfleisch F gebildeten Block 2 innerhalb der Form 4 zu komprimieren, damit der Block 2 besser zusammenhält, insbesondere eine homogene Dichteverteilung aufweist.

Die Erfindung bildet insgesamt eine einfache technische Lösung, um optisch hochwertige Scheiben 14 herzustellen. Dies ist insbesondere darauf zurückzuführen, dass innerhalb des Blocks 2 Fischfleischstücke quer in Längserstreckung L des Blocks 2 angeordnet sind, sodass das in Figur 2 schematisch dargestellte Schneidemesser 13 im Wesentlichen im Muskelfaserverlauf Scheiben 14 schneiden kann.

## Patentansprüche

1. Vorrichtung (1) mit mindestens einer länglich ausgebildeten Form (4), mittels welcher mindestens ein Block (2) aus Fleisch, insbesondere aus Fischfleisch (F), herstellbar ist, und mit mindestens einem länglich ausgebildeten Niederhalter (10), der innerhalb der Form (4) zum Fixieren einer darin eingelegten Materialbahn (11) aufnehmbar ist, wobei die Form (4) zwischen einer ersten Ausrichtung (A1), in welcher die Form (4) in ihrer Längserstreckung (L) liegend für einen Zusammenbau mit dem Niederhalter (10) positioniert ist, und einer zweiten Ausrichtung (A2) verstellbar gelagert ist, in welcher die Form (4) in ihrer Längserstreckung (L) stehend zur Aufnahme von Fleisch in übereinander liegenden Schichten (S) positioniert ist.

2. Vorrichtung nach Anspruch 1, **dadurch gekennzeichnet, dass** die Vorrichtung (1) eine Schwenkeinheit (5) für die Form (4) aufweist.

3. Vorrichtung nach Anspruch 2, **dadurch gekennzeichnet, dass** die Schwenkeinheit (5) eine Aufnahme (7) umfasst, in welcher die Form (4) zumindest abschnittsweise aufnehmbar ist.

4. Vorrichtung nach Anspruch 2 oder 3, **dadurch gekennzeichnet, dass** die Vorrichtung (1) einen Tisch (3) aufweist, wobei die Schwenkeinheit (5) an einer vom Tisch (3) gebildeten Außenkante (8) befestigt ist.

5. Vorrichtung nach Anspruch 3 oder 4, **dadurch gekennzeichnet, dass** anhand der Aufnahme (7) und des darin innerhalb der Form (4) aufgenommenen Niederhalters (10) eine Halterung (15) zum Befestigen von mindestens einer Verschlussplatte (16) für die Form (4) herstellbar ist.

6. Vorrichtung nach einem der vorangehenden Ansprüche, **dadurch gekennzeichnet, dass** die Form (4) im Wesentlichen kastenförmig ausgebildet ist und/oder die Form (4) ein Beladevolumen von mindestens 10cm x 10cm x 100cm aufweist.

7. Vorrichtung nach einem der vorangehenden Ansprüche, **dadurch gekennzeichnet, dass** die Form (4) mit einem Deckel zusammenbaubar ist, wobei das innerhalb der Form (4) aufgenommene Fleisch anhand des Deckels komprimierbar ist oder dass das innerhalb der Form (4) aufgenommene Fleisch anhand einer darauf aufgesetzten anderen Form (4) komprimierbar ist.

8. Verfahren zum Herstellen eines aus Fleisch, insbesondere aus Fischfleisch (F), geformten Blocks (2), umfassend mindestens die folgenden Schritte:
- Bereitstellen einer länglich ausgebildeten Form (4) in einer ersten Ausrichtung (A1), in welcher die Form (3) in Längserstreckung (L) liegend positioniert wird, um darin eine Materialbahn (11) mittels eines Niederhalters (10) zu fixieren,
- Verstellen der Form (4) samt dem darin aufgenommenen Niederhalter (10) aus der ersten Ausrichtung (A1) in eine zweite Ausrichtung (A2), in welcher die Form (4) in Längserstreckung (L) stehend positioniert wird, und
- Beladen der in der zweiten Ausrichtung (A2) gelagerten Form (4) mit Fleisch in übereinanderliegenden Schichten (S) zum Bilden eines Blocks (2) aus Fleisch.

9. Verfahren nach Anspruch 8, **dadurch gekennzeichnet, dass** der Block (2) aus Fleisch aus der Form (4) herausgenommen und einem Schneidvorgang zugeführt wird, anhand welchem quer zur Längserstreckung (L) des Blocks (2) Scheiben (14) aus dem Block (2) geschnitten werden.

10. Verfahren nach Anspruch 8 oder 9, **dadurch gekennzeichnet, dass** die Form (4) einem Pressvorgang zum Komprimieren des in der Form (4) gebildeten Blocks (2) aus Fleisch und/oder einem Räuchervorgang zum Aromatisieren des in der Form (4) gebildeten Blocks (2) aus Fleisch zugeführt wird.

## Claims

1. An apparatus (1) comprising at least one elongated mould (4) by means of which at least one block (2) of meat, in particular of fish meat (F), can be produced, and comprising at least one elongated hold-down device (10) which can be received within the mould (4) for fixing a web of material (11) inserted therein, wherein the mould (4) is adjustably mounted between a first orientation (A1), in which the mould (4) is positioned lying in its longitudinal extension (L) for assembly with the hold-down device (10), and a second orientation (A2), in which the mould (4) is positioned upright in its longitudinal extension (L) for receiving superimposed layers (S) of meat.

2. The apparatus according to claim 1, **characterized in that** the apparatus (1) includes a swivel unit (5) for the mould (4).

3. The apparatus according to claim 2, **characterized in that** the swivel unit (5) comprises a receptacle (7) in which the mould (4) can be received at least partially.

4. The apparatus according to claims 2 or 3, **characterized in that** the apparatus (1) includes a table (3), wherein the swivel unit (5) is attached to an outer edge (8) formed by the table (3).

5. The apparatus according to claims 3 or 4, **characterized in that** a holder (15) for fastening at least one closing plate (16) for the mould (4) can be formed by means of the receptacle (7) and the hold-down device (10) received therein within the mould (4).

6. The apparatus according to any one of the preceding claims, **characterized in that** the mould (4) is essentially box-shaped and/or the mould (4) has a loading volume of at least 10 cm x 10 cm x 100 cm.

7. The apparatus according to any one of the preceding claims, **characterized in that** the mould (4) can be assembled with a lid, wherein the meat received within the mould (4) can be compressed by means of the lid, or **in that** the meat received within the mould (4) can be compressed by means of another mould (4) placed on top of it.

8. A method for producing a block (2) formed from meat, in particular from fish meat (F), comprising at least the following steps:
- providing an elongated mould (4) in a first orientation (A1), in which the mould (3) is positioned lying in the longitudinal extension (L) in order to fix a material web (11) therein by means of a hold-down device (10),
- shifting the mould (4) together with the hold-down device (10) received therein from the first orientation (A1) to a second orientation (A2) in which the mould (4) is positioned upright in its longitudinal extension (L), and
- loading the mould (4) positioned in the second orientation (A2) with superimposed layers (S) of meat to form a block (2) of meat.

9. The method according to claim 8, **characterized in that** the block (2) of meat is removed from the mould (4) and fed to a cutting operation, by means of which slices (14) are cut from the block (2) transversely to the longitudinal extension (L) of the block (2).

10. The method according to claims 8 or 9, **characterized in that** the mould (4) is fed to a pressing process for compressing the block (2) of meat formed in the mould (4) and/or to a smoking process for flavouring the block (2) of meat formed in the mould (4).

## Revendications

1. Dispositif (1) avec au moins un moule (4) de forme allongée, au moyen duquel au moins un bloc (2) de viande, en particulier de chair de poisson (F), peut être fabriqué, et avec au moins un serre-flan (10) de forme allongée, qui peut être logé à l'intérieur du moule (4) pour fixer une bande de matériau (11) placée dans celui-ci, le moule (4) étant monté de manière réglable entre une première orientation (A1), dans laquelle le moule (4) est positionné couché dans son extension longitudinale (L) pour un assemblage avec le serre-flan (10), et une deuxième orientation (A2), dans laquelle le moule (4) est positionné debout dans son extension longitudinale (L) pour recevoir de la viande en couches superposées (S).

2. Dispositif selon la revendication 1, **caractérisé en ce que** le dispositif (1) comprend une unité de pivotement (5) pour le moule (4).

3. Dispositif selon la revendication 2, **caractérisé en ce que** l'unité de pivotement (5) comprend un logement (7) dans lequel le moule (4) peut être logé au moins par sections.

4. Dispositif selon la revendication 2 ou 3, **caractérisé en ce que** le dispositif (1) présente une table (3), l'unité de pivotement (5) étant fixée sur un bord extérieur (8) formé par la table (3).

5. Dispositif selon la revendication 3 ou 4, **caractérisé en ce qu'**à l'aide du logement (7) et du serre-flan (10) logé dans celui-ci à l'intérieur du moule (4), il est possible de fabriquer un support (15) pour la fixation d'au moins une plaque de fermeture (16) pour le moule (4).

6. Dispositif selon l'une des revendications précédentes, **caractérisé en ce que** le moule (4) est essentiellement en forme de boîte et/ou que le moule (4) présente un volume de chargement d'au moins 10 cm x 10 cm x 100 cm.

7. Dispositif selon l'une des revendications précédentes, **caractérisé en ce que** le moule (4) peut être assemblé avec un couvercle, la viande reçue à l'intérieur du moule (4) étant compressible à l'aide du couvercle ou **en ce que** la viande reçue à l'intérieur du moule (4) est compressible à l'aide d'un autre moule (4) posé sur celui-ci .

8. Procédé de fabrication d'un bloc (2) formé de viande, en particulier de chair de poisson (F), comprenant au moins les étapes suivantes :
- de mise à disposition d'un moule (4) de forme allongée sous une première orientation (A1), dans laquelle le moule (3) est positionné couché dans le sens de l'extension longitudinale (L), afin d'y fixer une bande de matériau (11) au moyen d'un serre-flan (10),
- d'ajustement du moule (4), y compris du serre-flan (10) qui y est logé, de la première orientation (A1) à une deuxième orientation (A2), dans laquelle le moule (4) est positionné debout dans l'extension longitudinale (L), et
- de remplissage du moule (4) stocké dans la deuxième orientation (A2) avec de la viande en couches superposées (S) pour former un bloc (2) de viande.

9. Procédé selon la revendication 8, **caractérisé en ce que** le bloc (2) de viande est retiré du moule (4) et soumis à une opération de découpe au moyen de laquelle des tranches (14) sont découpées dans le bloc (2) transversalement à l'extension longitudinale (L) du bloc (2) .

10. Procédé selon la revendication 8 ou 9, **caractérisé en ce que** le moule (4) est soumis à une opération de compression pour comprimer le bloc (2) de viande formé dans le moule (4) et/ou à une opération de fumage pour aromatiser le bloc (2) de viande formé dans le moule (4).
